# EUROPEAN PATENT SPECIFICATION

(11) **EP 1 825 645 B1**
(45) Date of publication and mention of the grant of the patent: **20.05.2009**
(21) Application number: 05826718.8
(22) Date of filing: 09.12.2005
(51) Int. Cl.: H04L 12/56, H04L 12/28, H04B 7/26, H04W 16/00, H04J 3/16

(54) **EFFICIENT ALLOCATION OF SHARED BANDWIDTH**
EFFIZIENTE ZUTEILUNG GEMEINSAM BENUTZTER BANDBREITE
ALLOCATION EFFICACE DE BANDE PASSANTE PARTAGEE

(30) Priority: 09.12.2004 US 635353 P
(43) Date of publication of application: 29.08.2007
(73) Proprietor: NXP B.V., 5656 AG Eindhoven (NL)
(72) Inventor: TAKASHI, Sato, NL-5621 BA Eindhoven (NL)
(74) Representative: Röggla, Harald
(86) International application number: PCT/IB2005/054168
(87) International publication number: WO 2006/061807

(56) References cited:
- EP-A- 1 211 823
- EP-A- 1 478 135
- WO-A-03/079579
- XIN LIU ET AL: "Scheduling algorithms analysis for MPEG-4 traffic in UWB" 2004 IEEE 60TH VEHICULAR TECHNOLOGY CONFERENCE. VTC2004-FALL (IEEE CAT. NO.04CH37575) IEEE PISCATAWAY, NJ, USA, vol. 7, 26 September 2004 (2004-09-26), pages 5310-5314, XP009065095 ISBN: 0-7803-8521-7
- RANGNEKAR A ET AL: "Multiple Channel Scheduling in UWB based IEEE 802.15.3 Networks" BROADBAND NETWORKS, 2004. FIRST INTERNATIONAL CONFERENCE ON SAN JOSE, CA, USA, 25-29 OCT. 2004, PISCATAWAY, NJ, USA, 25 October 2004 (2004-10-25), pages 406-415, XP010749116 ISBN: 0-7695-2221-1
- SEUNG HYONG RHEE ET AL: "An application-aware MAC scheme for IEEE 802.15.3 high-rate WPAN" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 2, 21 March 2004 (2004-03-21), pages 1018-1023, XP010708268 ISBN: 0-7803-8344-3
- YI-HSIEN TSENG ET AL: "Efficient resource allocation for IEEE 802.15.3(a) ad hoc networks" INTELLIGENCE IN COMMUNICATION SYSTEMS. IFIP INTERNATIONAL CONFERENCE, INTELLCOMM 2004. PROCEEDINGS (LECTURE NOTES IN COMPUTER SCIENCE VOL.3283) SPRINGER-VERLAG BERLIN, GERMANY, 26 November 2004 (2004-11-26), pages 128-142, XP009065098 ISBN: 3-540-23893-X

## Description

The present invention relates to bandwidth sharing by communication devices.

In communication networks, devices are often required to share bandwidth of a shared medium, wired or wireless. One example of such a network is a wireless PAN (personal area network). Such networks are ad hoc, meaning that devices may join the network or leave the network frequently without advance warning. A mechanism is then required to coordinate sharing of the medium - in this instance wireless spectrum. The same problem occurs to various degrees in various different types of networks.

A particular challenge arises in balancing device access against efficient use of medium. In one proposed solution, a device is free to reserve resource with relatively few restrictions. Efficiency of medium use therefore suffers.

Xin Liu et al, "Scheduling algorithms analysis for MPEG-4 traffic in UWB", 2004 IEEE 60th Vehicular Technology Conference, VTC2004-FALL (IEEE CAT. NO.04CH37575), IEEE Piscataway, NJ, USA, vol. 7, 26-29 September 2004, pages 5310-5314, discloses a scheduling algorithm. Herein, a superframe is composed of three parts: the beacon, the contention access period (CTP) and the channel time allocation period (CTAP). The CTAP consists of channel time allocations (CTAs) and management CTAs (MTCAs). This method leads to a frame structure in which a beacon is followed by CTAs or MCTAs and CTAs followed by idle timeslots.

Rangnekar A. et al, "Multiple Channel Scheduling in UWB based IEEE 802.15.3 Networks", Broadband Networks, 2004, First International Conference on San Jose, CA, USA, 25-29 Oct. 2004, Piscataway, NJ, USA, pages 406-415, discloses a multiple channel scheduling. Hereby, nodes request channels for transmission. These requests are scheduled on the available channels in a collision-less manner. Free channels may be allocated and are then added to the busy channels.

WO 03/079579 discloses a method of using sub-rate slots in an ultrawide bandwidth system. Hereby, the sub-rate slots are spread evenly among several superframes. Devices that desire to send data will be assigned one or more slots, i.e. sub-rate slots. The devices are spread out each being assigned to the first empty superframe in the progression after the previous devices are assigned. The beacon information repeats after maximum of N_{R} superframes where N_{R} is the length of the highest sub-rate. The result of this method is a sequence of superframes without overlapping data. The cycle will repeat itself after the last frequent sub-rate slot, i.e. superframe is sent.

EP 1 211 823 A discloses a method for time-division multiplexing. Multiple frames are transmitted in a time frame. One time frame contains multiple time slots. These time slots are allocated in such a manner that allocated slots are arranged at the beginning of the frame followed by unallocated slots.

The present invention, generally speaking, provides for sharing of bandwidth of a shared medium between multiple devices. In one embodiment, the shared medium is structured in accordance with a frame or superframe structure, each frame or superframe having medium access slots of specified time duration defined therein, groups ofN contiguous medium access slots defining different allocations zones, groups of M medium access slots defining coordinated sets of medium access slots, wherein the medium access slots of a coordinated set belonging to different allocation zones are equally spaced in time. A device identifies a reservation as regular or irregular, wherein a regular reservation causes the entire medium access slots in one or more coordinated sets to be allocated. In the case of a regular or an irregular reservation, allocating medium access slots such that a number of unallocated contiguous coordinated sets of medium access slots within each allocation zone is maximized.

The present invention may be more fully understood from the following description in conjunction with the appended drawing. In the drawing:
Figure 1 is a block diagram of a system in which the present invention may be used.
Figure 2 is a diagram illustrating a superframe structure.
Figure 3 is a diagram of the superframe structure of Figure 2, illustrating allocation zones.
Figure 4 is a diagram of the superframe structure of Figure 2, illustrating coordinated MAS sets.
Figure 5 is a diagram illustrating conventional allocation within the superframe.
Figure 6 is a diagram illustrating allocation within the superframe in accordance with one aspect relating to the present invention.
Figure 7 is a diagram illustrating allocation within the superframe in accordance with one aspect of the present invention.
Figure 8 is a diagram illustrating an allocation example in accordance with the present invention.

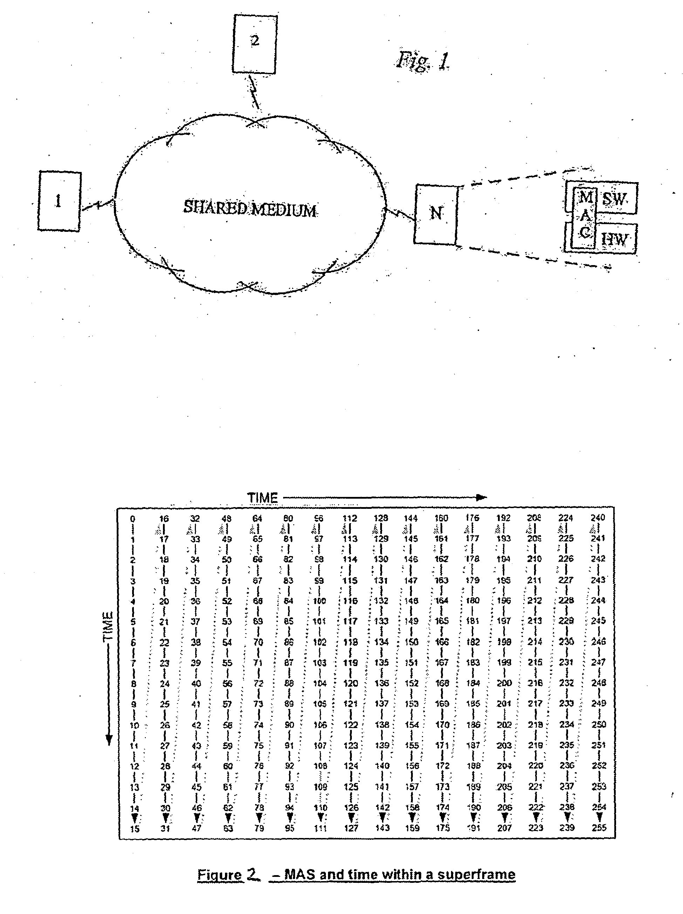

Referring now to Figure 1, a block diagram is shown of an exemplary system in which the present invention may be used. A number of devices, in this case wireless PAN devices, share a medium, in this case wireless spectrum. Further details of a device are shown. The device includes a hardware subsystem and a software subsystem. A medium access controller (MAC) controls access of the device to the shared medium. In the case of a wireless PAN device, the MAC may be of a type specified in the standard IEEE 802.15.3, for example. Typically, the MAC will be realized in a combination of hardware and software.

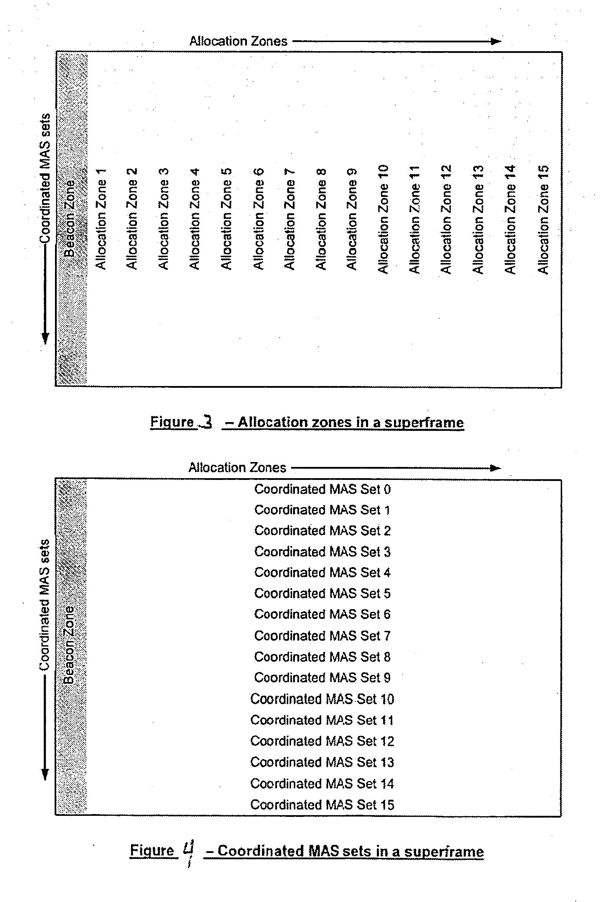

The shared medium may be organized in accordance with a known superframe structure illustrated in Figure 2. The number of time slots (also referred to as Medium Access Slots, or MAS) in a superframe is 256. For conceptual and illustrative purposes, the timeslots are arranged in columns of 16 as shown in Figure 2. Typically, a column is referred to as an allocation zone. One column, however, is set aside as a beacon zone. In the case of 256 MAS and columns of 16 MAS, there is one beacon zone (the first column) and 15 allocation zones as shown in Figure 3. A row is referred to as a coordinated MAS set. In the present example, there are 16 coordinated MAS sets, numbered 0-15, as shown in Figure 4.

A conventional Distributed Reservation Protocol (DRP) may be used by devices to gain access to the shared medium. In DRP, an aspiring reservation owner listens to the beacons and find unallocated MAS identified in the beacons. It then announces in its own beacon its intention to use some of the unallocated MAS, which constitutes a reservation.

All other devices are obliged to honor the reservations identified in the beacons. [A DEVICE OBTAINS A BEACON by receiving beacon frames during each beacon period.]

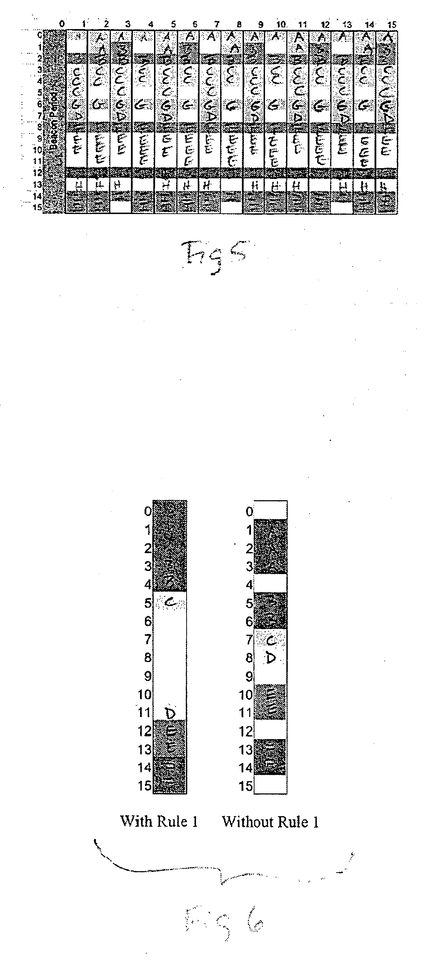

Conventional methods of allocation suffer the problem that unallocated MAS are often scattered. An example of such an allocation is shown in Figure 5. Allocation and use of scattered MAS is burdensome and inefficient and is likely to adversely impact device operation.

A more efficient allocation may be achieved by performing allocation in accordance with one, more preferably both, of the following rules:
1. A MAS allocation in each allocation zone shall be made so as to leave the contiguous unallocated MAS in the zone as large as possible, by taking advantage of the requirements of different application types, which afford some flexibility in the location of each MAS allocation.
2. A set of regular MAS (i.e., a multiple of 15) shall be allocated in one end of the allocation map and an irregular MAS allocation (i.e., all others) in the other end (as shown below), which minimizes the chance of unallocated MAS being trapped by allocated MAS.

Application of the first rule is illustrated in Figure 6. Without application of the rule, unallocated MAS within an allocation zone become scattered. With application of the rule, unallocated MAS within an allocation zone are contiguous.

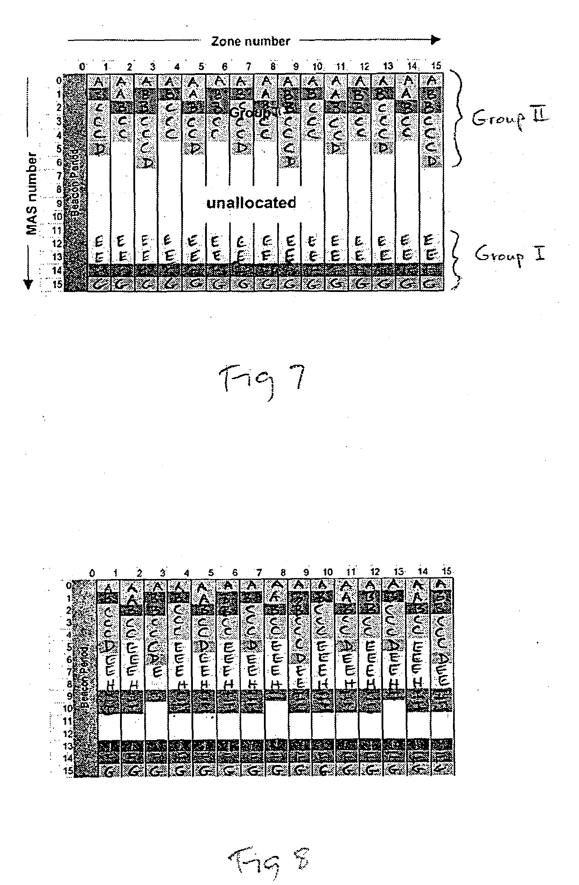

Application of the second rule is illustrated in Figure 7. Allocations are divided into two different groups, Group I and Group II. Group I includes allocations of one or more complete coordinated MAS sets. In the illustrated example, Group I allocations are made from the bottom of the superframe upward. Group II includes all other allocations. In the illustrated example, Group II allocations are made from the top of the superframe downward. Unallocated MAS are located in the middle region of the superframe.

Applied together to the example of Figure 5, the foregoing rules result in the allocation of Figure 8. Comparing the two allocations, the same number of MAS are allocated to each device. However, in Figure 8, unallocated MAS are contiguous in each zone. This arrangement maximizes the efficiency of contention-based channel access.

It will be appreciated by those or ordinary skill in the art that the invention can be embodied in other specific forms without departing from the essential character thereof. The disclosed embodiments are therefore intended in all respects to be illustrative and not restrictive. The scope of the invention is indicated by the appended claims rather than the foregoing description, and all changes which fall within the meaning and range of equivalents thereof are intended to be embraced therein.

## Claims

1. A method of sharing bandwidth of a shared medium between multiple devices, the shared medium being structured in accordance with a frame or superframe structure, each frame or superframe having medium access slots of specified time duration defined therein, groups of N contiguous medium access slots defining different allocations zones, groups of M medium access slots defining coordinated sets of medium access slots, wherein the medium access slots of a coordinated set belonging to different allocation zones are equally spaced in time, the method comprising a device performing the steps of: identifying a reservation as regular (E, F, G) or irregular (A, B, C, D), wherein a regular reservation causes the entire medium access slots in one or more coordinated sets to be allocated; and preferring a first coordinated set of medium access slots and coordinated sets of medium access slots contiguous thereto for allocations corresponding to regular reservations; and preferring part of a second coordinated set of medium access slots and coordinated sets of medium access slots contiguous thereto for allocations corresponding to irregular reservations; wherein the first coordinated set of medium access slots and the second coordinated set of medium access slots are as widely separated as possible within the two-dimensional representation of the frame or superframe structure such that allocations of the first coordinated set of medium access slots are made from one end of the frame or superframe structure and allocations of the second coordinated set of medium access slots are made from the other end of the frame or superframe structure.

2. A device that accesses a shared medium, the shared medium being structured in accordance with a frame or superframe structure, each frame or superframe having medium access slots of specified time duration defined therein, groups of N contiguous medium access slots defining different allocations zones, groups of M medium access slots defining coordinated sets of medium access slots, wherein the medium access slots of a coordinated set belonging to different allocation zones are equally spaced in time, the device comprising: means for identifying a reservation as regular (A, B, C, D) or irregular (E, F, G), a regular reservation causes the entire medium access slots in one or more coordinated sets to be allocated; and means for preferring a first coordinated set of medium access slots and coordinated sets of medium access slots contiguous thereto for allocations corresponding to regular reservations; and means for preferring part of a second coordinated set of medium access slots and coordinated sets of medium access slots contiguous thereto for allocations corresponding to irregular reservations; wherein the first coordinated set of medium access slots and the second coordinated set of medium access slots are as widely separated as possible within the two-dimensional representation of the frame or superframe such that allocations of the first coordinated set of medium access slots are made from one end of the frame or superframe structure and allocations of the second coordinated set of medium access slots are made from the other end of the frame or superframe structure.

## Patentansprüche

1. Verfahren zum gemeinsamen Benutzen von Bandbreite eines gemeinsam benutzten Mediums zwischen mehreren Vorrichtungen, wobei das gemeinsam benutzte Medium gemäß einer Rahmen- oder Superrahmen-Struktur gegliedert ist, wobei jeder Rahmen oder Superrahmen Mediumzugangsschlitze einer spezifizierten Zeitdauer aufweist, die darin definiert sind, wobei Gruppen von N zusammenhängenden Mediumzugangsschlitzen unterschiedliche Zuweisungsordnungszonen definieren, Gruppen von M Mediumzugangsschlitzen koordinierte Sätze von Mediumzugangsschlitzen definieren, wobei die Mediumzugangsschlitze eines koordinierten Satzes, die zu unterschiedlichen Zuweisungszonen gehören, zeitlich gleich beabstandet sind, und wobei das Verfahren eine Vorrichtung die Schritte ausführen lässt:
Bestimmen einer Belegung als regelmäßig (E, F, G) oder unregelmäßig (A, B, C, D), wobei eine regelmäßige Belegung bewirkt, dass die gesamten Mediumzugangsschlitze in einem oder mehreren koordinierten Sätzen zugewiesen werden; und Bevorzugen eines ersten koordinierten Satzes von Mediumzugangsschlitzen und koordinierter Sätze von Mediumzugangsschlitzen zusammenhängend mit diesem für Zuweisungen entsprechend den regelmäßigen Belegungen; und Bevorzugen eines Teils eines zweiten koordinierten Satzes von Mediumzugangsschlitzen und koordinierter Sätze von Mediumzugangsschlitzen zusammenhängend mit diesem für Zuweisungen entsprechend den unregelmäßigen Belegungen; wobei der erste koordinierte Satz von Mediumzugangsschlitzen und der zweite koordinierte Satz von Mediumzugangsschlitzen innerhalb der zweidimensionalen Darstellung der Rahmen- oder Superrahmen-Struktur möglichst weit voneinander getrennt sind, so dass Zuweisungen des ersten koordinierten Satzes von Mediumzugangsschlitzen ausgehend von einem Ende der Rahmen- oder Superrahmen-Struktur vorgenommen werden und Zuweisungen des zweiten koordinierten Satzes von Mediumzugangsschlitzen ausgehend vom anderen Ende der Rahmen- oder Superrahmen-Struktur vorgenommen werden.

2. Vorrichtung, die auf ein gemeinsam benutztes Medium zugreift, wobei das gemeinsam benutzte Medium gemäß einer Rahmen- oder Superrahmen-Struktur gegliedert ist, wobei jeder Rahmen oder Superrahmen Mediumzugangsschlitze einer spezifizierten Zeitdauer aufweist, die darin definiert sind, wobei Gruppen von N zusammenhängenden Mediumzugangsschlitzen unterschiedliche Zuweisungszonen definieren, wobei Gruppen von M Mediumzugangsschlitzen koordinierte Sätze von Mediumzugangsschlitzen definieren, wobei die Mediumzugangsschlitze eines koordinierten Satzes, die zu unterschiedlichen Zuweisungszonen gehören, zeitlich gleich beabstandet sind, und wobei die Vorrichtung umfasst: Mittel zum Bestimmen einer Belegung als regelmäßig (A, B, C, D) oder unregelmäßig (E, F, G), wobei eine regelmäßige Belegung bewirkt, dass die gesamten Mediumzugangsschlitze in einem oder mehreren koordinierten Sätzen zugewiesen werden; und Mittel zum Bevorzugen eines ersten koordinierten Satzes von Mediumzugangsschlitzen und koordinierter Sätze von Mediumzugangsschlitzen, die mit diesem zusammenhängen, für Zuweisungen entsprechend den regelmäßigen Belegungen; und Mittel zum Bevorzugen eines Teils eines zweiten koordinierten Satzes von Mediumzugangsschlitzen und koordinierter Sätze von Mediumzugangsschlitzen, die mit diesem zusammenhängen, für Zuweisungen entsprechend den unregelmäßigen Belegungen; wobei der erste koordinierte Satz von Mediumzugangsschlitzen und der zweite koordinierte Satz von Mediumzugangsschlitzen innerhalb der zweidimensionalen Darstellung des Rahmens oder Superrahmens möglichst weit voneinander getrennt sind, so dass Zuweisungen des ersten koordinierten Satzes von Mediumzugangsschlitzen ausgehend von einem Ende der Rahmen- oder Superrahmen-Struktur vorgenommen werden und Zuweisungen des zweiten koordinierten Satzes von Mediumzugangsschlitzen ausgehend vom anderen Ende der Rahmen- oder Superrahmen-Struktur vorgenommen werden.

## Revendications

1. Procédé de partage de bande passante d'un support partagé entre de multiples dispositifs, le support partagé étant structuré selon une structure de trame ou de multitrame, chaque trame ou chaque multitrame ayant des fenêtres d'accès au support d'une durée donnée définie en elle, des groupes de N fenêtres contiguës d'accès au support définissant des zones d'allocations différentes, des groupes de M fenêtres d'accès au support définissant des ensembles coordonnés de fenêtres d'accès au support, dans lequel les fenêtres d'accès au support d'un ensemble coordonné correspondant à différentes zones d'allocation sont espacées de façon égale dans le temps, le procédé comprenant un dispositif effectuant les étapes consistant à : identifier une réservation comme régulière (E, F, G) ou irrégulière (A, B, C, D), dans lequel une réservation régulière entraîne l'allocation de la totalité des fenêtres d'accès au support dans un ou plusieurs ensemble(s) coordonné(s) ; et à préférer un premier ensemble coordonné de fenêtres d'accès au support et des ensembles coordonnés de fenêtres d'accès au support qui lui sont contigus pour des allocations correspondant à des réservations régulières ; et à préférer une partie d'un second ensemble coordonné de fenêtres d'accès au support et des ensembles coordonnés de fenêtres d'accès au support qui lui sont contigus pour des allocations correspondant à des réservations irrégulières ; dans lequel le premier ensemble coordonné de fenêtres d'accès au support et le second ensemble coordonné de fenêtres d'accès au support sont séparés aussi largement que possible dans les limites de la représentation bidimensionnelle de la structure de trame ou de multitrame de telle sorte que des allocations du premier ensemble coordonné de fenêtres d'accès au support sont réalisées à partir d'une extrémité de la structure de trame ou de multitrame et que des allocations du second ensemble coordonné de fenêtres d'accès au support sont réalisées à partir de l'autre extrémité de la structure de trame et de multitrame.

2. Dispositif qui donne accès à un support partagé, le support partagé étant structuré selon une structure de trame ou de multitrame, chaque trame ou multitrame comportant des fenêtres d'accès au support d'une durée donnée définie en elle, des groupes de N fenêtres contiguës d'accès au support définissant différentes zones d'allocation, des groupes de M fenêtres d'accès au support définissant des ensembles coordonnés de fenêtres d'accès au support, dans lequel les fenêtres d'accès au support d'un ensemble coordonné correspondant à des zones d'allocation différentes sont espacées de façon égale dans le temps, le dispositif comprenant des moyens pour identifier une réservation comme étant régulière (A, B, C, D) ou irrégulière (E, F, G), dans lequel une réservation régulière entraîne l'allocation de la totalité des fenêtres d'accès au support dans un ensemble ou dans plusieurs ensembles coordonné(s) ; et des moyens pour préférer un premier ensemble coordonné de fenêtres d'accès au support et des ensembles coordonnés de fenêtres d'accès qui lui sont contigus pour des allocations correspondant à des réservations régulières, et des moyens pour préférer une partie d'un second ensemble coordonné de fenêtres d'accès au support et des ensembles coordonnés de fenêtres d'accès au support qui lui sont contigus pour des allocations correspondant à des réservations irrégulières ; dans lequel le premier ensemble coordonné de fenêtres d'accès au support et le second ensemble coordonné de fenêtres d'accès au support sont séparés autant que possible dans les limites d'une représentation bidimensionnelle de la structure de trame ou multitrame de telle sorte que des allocations du premier ensemble coordonné de fenêtres d'accès au support soient réalisées à partir d'une extrémité de la structure de trame ou de multitrame et que des allocations du second ensemble coordonné de fenêtres d'accès au support soit réalisées à partir de l'autre extrémité de la structure de trame ou de multitrame.
